(19)

Europäisches
Patentamt
European
Patent Office
Office européen
des brevets

(11) **EP 3 086 502 A1**

(12) **EUROPEAN PATENT APPLICATION**

(43) Date of publication:
**26.10.2016 Bulletin 2016/43**

(51) Int Cl.:
*H04L 7/00* (2006.01)     *H04L 7/027* (2006.01)
*H04B 10/61* (2013.01)     *H04J 14/02* (2006.01)
*H04J 14/06* (2006.01)     *H04B 10/077* (2013.01)

(21) Application number: **15164397.0**

(22) Date of filing: **21.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ALCATEL LUCENT
92100 Boulogne-Billancourt (FR)**

(72) Inventors:
• **Dorize, Christian
91620 Nozay (FR)**
• **Renaudier, Jeremie
91620 Nozay (FR)**

(74) Representative: **Cabinet Camus Lebkiri
25 rue de Maubeuge
75009 Paris (FR)**

(54) **METHOD FOR OPTIMIZING CLOCK RECOVERY PERFORMANCES AT A COHERENT OPTICAL RECEIVER OF AN OPTICAL WDM TRANSMISSION SYSTEM, RECEIVER ASSOCIATED**

(57)     The invention relates to a method (Mth) for optimizing clock recovery performances at a coherent optical receiver (Rx) of an optical Wavelength Division Multiplexed transmission system, said method (Mth) comprising the following steps:
- Sampling (Smp_Xp°Yp°), at a samples per symbol rate (xSPS), a pair of complex polarization signals (Xp°, Yp°) of a Polarization Division Multiplexed optical signal (Sg) received from a coherent optical transmitter at a symbol rate (SB), so as to obtain a pair of digital complex polarization signals (Xp, Yp)
- Recovering (Rec_OSC) a receiver clock in the pair of digital complex polarization signals (Xp, Yp), using a clock recovery algorithm, at a clock rate equal to the sample per symbol rate (xSPS)
- Calculating (Calc_Pst) a performance estimate (Pst) of said clock receiver recovery
- If said performance estimate (Pst) is below a performance threshold (Thr), then :
• replacing (Prgm_Alg) the clock recovery algorithm with a selected clock recovery algorithm, and
• modifying (Mod_xSPS) the sample per symbol rate (xSPS) in accordance with a range of acceptable samples per symbol rates for the selected clock recovery algorithm

- Reiterating the previous steps until the performance estimate (Pst) reaches the performance threshold (Thr).

FIG. 5

**Description**

**FIELD OF THE INVENTION**

The present invention relates to optical transmission systems. In particular, the present invention relates to high efficiency wavelength division multiplexing (WDM) optical communication systems. Wavelength-division multiplexing is a method of combining multiple signals on laser beams at various infrared (IR) wavelengths for transmission along fiber optic media. The light of each laser is modulated by an independent set of signals.

**BACKGROUND OF THE INVENTION**

Optical communication systems typically comprise separate clocks (e.g. VCO, Voltage controlled oscillators) at their transmitters and receivers. Thus, clocks at a transmitter and a receiver may deviate from one another. This may impact the performance of the communication link provided by the transmitter and the receiver. If the clock of the receiver operates (and transmits data symbols) at a lower rate than the clock of the transmitter, the receiver may miss out data symbols. On the other hand, if the clock of the receiver operates at a higher rate than the clock of the transmitter, the receiver may create copies of some of the data symbols. In any case, the mismatch of the clocks typically leads to an increased bit error rate and an increased outage probability of the communication link. This is particularly relevant if the transmitted sequences of data symbols are relatively long, because the mismatch between the clocks at the transmitter and the receiver will lead to system outage.

Thus, one key challenge is to recover the transmitter clock at the receiver. In particular, it is desirable to recover clock information from the received data symbols itself. In optical transmission systems, data symbols are usually continuously transmitted from the transmitter to the receiver (in a so called circuit mode or a so called synchronous mode) at a symbol rate SB, SB being a real number greater than zero. The symbol rate corresponds to the number of symbols transmitted per second, according to the clock of the transmitter. However, the receiver receives a continuous stream of data symbols at a symbol rate $SB.(1+\varepsilon)$, $\varepsilon$ being the timing error.

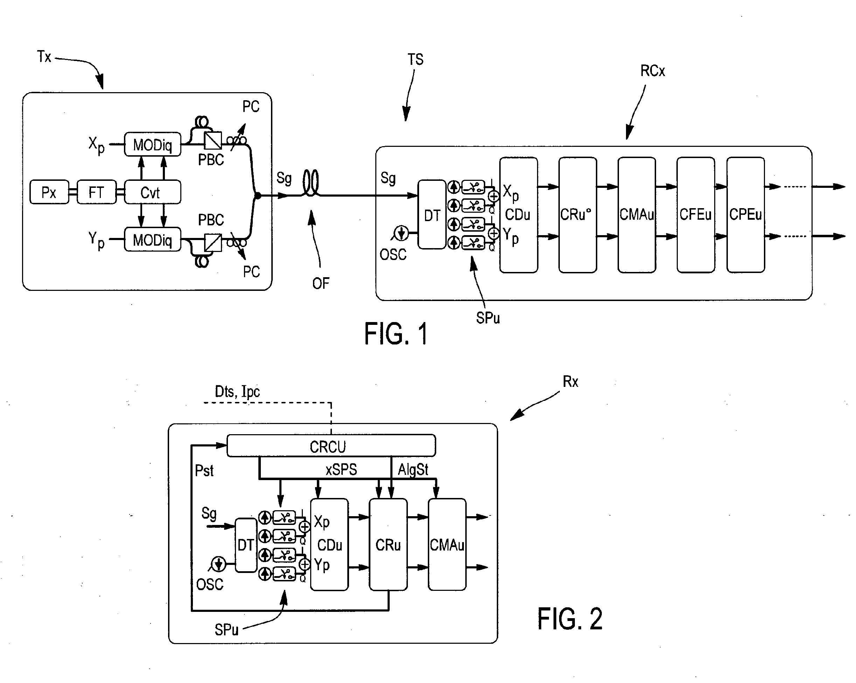

Figure 1 illustrates an example optical transmission system TS comprising a transmitter Tx, an optical transmission path OF and a receiver RCx. The transmitter Tx is adapted to generate a Polarization Division Multiplexed (PDM) optical signal Sg comprising a first polarization component Xp and a second polarization component Yp. Polarization Division Multiplexing is a physical layer method for multiplexing signals carried on electromagnetic waves using the polarization of the electromagnetic waves to distinguish between the different orthogonal signals.

The transmitter Tx comprises a first digital signal processor Px providing two sequences of symbols at the symbol rate SB for the two polarizations of an optical signal Sg. The two sequences of symbols are filtered by a transmitter filter FT used for pulse shaping, in order to reduce the crosstalk between adjacent WDM channels. As such, the transmitter filter FT may be referred as pulse shaping filter. Pulse shaping is the process of changing the waveform of transmitted pulses, in order to make the transmitted signal better suited to the communication channel, typically by limiting the effective bandwidth of the transmission. Digital pulse shaping in coherent transponder systems is an effective way to reduce channels widths and thus enhance the capacity in optical fiber transmissions. Then, a Digital-to-Analog Converter Cvt is used to convert the filtered sequences of symbols into a pair of electrical signals. Finally, the pair of electrical signals is used to modulate, via I/Q modulators MODiq, the two polarizations Xp, Yp, of the optical signal Sg, which are transmitted over the transmission path OF, using polarization beam combiners PBC.

The receiver RCx is a coherent optical receiver which is configured to convert the received optical signal Sg into a pair of complex digital signals Xp, Yp, said digital signals Xp, Yp corresponding to the two polarization signals managed by the transmitter Tx. Each digital signal Xp, Yp comprises an in-phase component and a quadrature-phase component. For this purpose, the coherent receiver Rx comprises a coherent detector DT and a sampling unit SPu that comprises a bank of Analog-to-Digital Converters. Furthermore, the optical receiver RCx comprises a second digital processor which processes the pair of digital signals, in order to recover the two sequences of symbols. The processing of the pair of digital signals comprises Chromatic Dispersion (CD) compensation (via a CD compensation unit CDu), CMA-based polarization demultiplexing (via a demultiplexing unit CMAu), Carrier Frequency recovery (CFE) (via a frequency estimation unit CFEu) and Carrier Phase recovery (CPE) (via a phase estimation unit CPEu).

Several timing-error estimation algorithms were introduced in order to estimate and recover the clock mismatch between the receiver and the transmitter sides. These algorithms are implemented by a clock recovery unit CRu° added at the receiver side RCx between the CD compensation unit CDu and the CMA-based polarization demultiplexing unit CMAu, as shown in Figure 1. The clock recovery unit CRu° is in charge of detecting and compensating the frequency drift (typically in the range +/-40ppm (parts per million), that is +/- 1.3MHz at 32.5Gbaud) of a local oscillator OSC of the receiver RCx compared to the clock rate used at the transmitter Tx.

On top of two standard timing estimation algorithms introduced in the 80':

- (1) "Passband timing recovery in all digital modem receiver", D. Godard, IEEE Trans. On Communication, 1978;
- (2) "A BPSK/QPSK timing-error detector for sampled signals", F. Gardner, IEEE Trans. On Communications, 1986),

new algorithms have been proposed recently to cope with frequency selective pulse shapes:

- (3) "Digital clock recovery algorithm for Nyquist signal", Meng Yan & al, OFC proceedings, 2013;
- (4) "Digital phase detector for Nyquist and Faster than Nyquist systems", N. Stojanovic, IEEE Com Letters, 2014).

However, none of them is able to provide good and stable timing estimation performances whatever:

- The optical channel propagation conditions (the methods performances are sensitive to impairments like Polarization Mode Dispersion - PMD. Polarization mode dispersion is a form of modal dispersion where two different polarizations of light in a waveguide, which normally travel at the same speed, travel at different speeds due to random imperfections and asymmetries, causing random spreading of optical pulses).
- The modulation format (the methods performances are sensitive to modulation format change, for example a move from QPSK to 16QAM format, which is an issue for elastic transponders).
- The pulse shape selectivity of the pulse shaping filters (the pulse shaping filters are typically a Root Raised Cosine - RRC - filters with a Roll-Off Factor between 0 and 1. The methods performances are sensitive to this Roll-Off factor).
- The receiver samples per symbol rate (most of the units at the receiver side are designed for a sampling rate of 2 Samples per Symbol (SPS). The methods performances are sensitive to a decrease in the sampling rate).

For example, it was shown by the authors of the present invention that the Meng Yan algorithm (3) outperforms the Gardner (2) one with the QPSK format, whereas it collapses with the 16QAM format, for a RRC pulse shape with a Roll-Off Factor of 0.05. The following chart compares the performances of two timing estimation algorithms depending on the modulation format. Here, performance is defined as the intensity of the emerging tone in the Power Spectral Density of the time signal viewed at the detector output, divided by the average intensity of this signal. Throughout the rest of the document, performance is therefore referred to as a Tone to Noise Ratio (TNR). The emerging tone location gives an estimate of the drift to be compensated. The higher this ratio, the higher the ability of the detector to extract the clock drift information.

|            | PDM-QPSK | PDM-16QAM |
|------------|----------|-----------|
| (2): Gardner | 18 dB | 16 dB |
| (3): Meng Yan | 19 dB | 12 dB |

It was also shown by the authors of the present invention that the Gardner algorithm (2) can handle a samples per symbol rate from 2 SPS to 1.125 SPS without any significant loss in performance whereas the Meng Yan algorithm (3) performance strongly decreases below 2 SPS.

**SUMMARY OF THE INVENTION**

Thus, the present invention addresses the technical problem of clock recovery (also referred to as timing recovery) whatever the optical channel propagation conditions, the modulation format, the pulse shape selectivity of the pulse shaping filters, and the receiver sampling rate.

The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

According to a first aspect, the invention relates to a method for optimizing clock recovery performances at a coherent optical receiver of an optical Wavelength Division Multiplexed transmission system, said method comprising the following steps:

- Sampling, at a samples per symbol rate, a pair of complex polarization signals of a Polarization Division Multiplexed optical signal received from a coherent optical transmitter at a symbol rate, so as to obtain a pair of digital complex polarization signals
- Recovering the receiver clock in the pair of digital complex polarization signals, using a clock recovery algorithm, at a clock rate equal to the sample per symbol rate

- Calculating a performance estimate of said recovery
- If said performance estimate is below a performance threshold, then :

  • replacing the algorithm with a selected clock recovery algorithm, and
  • modifying the sample per symbol rate in accordance with a range of acceptable samples per symbol rates for the selected algorithm

- Reiterating the previous steps until the performance estimate reaches the performance threshold.

Given the drastic performance variations of the timing estimation algorithms cited in the introductory section, depending on parameters such as the samples per symbol rate, the modulation format or the polarization rotation for example, it is desirable to have the option of performing the timing estimation with more than one algorithm. The method according to the invention enables the switching from one algorithm to another depending on their performances, so that the performance of the recovery stays above a threshold (for example based on a TNR value). Besides that, since algorithms cannot handle any samples per symbol rate, it is necessary to adapt the sample per symbol rate to the in-use algorithm.

According to a non-limited embodiment, the method comprises the following step, after the step of calculating a performance estimate: if the performance estimate is higher than the performance threshold, then lowering the samples per symbol rate in accordance with a range of acceptable samples per symbol rates for the algorithm.

Reducing the samples per symbol rate is of great interest to lower the power consumed in the first units of the receiver stage, i.e. between the sampling unit up to the CMA-based demultiplexing unit, providing that it does not impact the recovery performance. With such a configuration, the clock rate at the sampling unit and the clock recovery unit are reduced, which leads to power savings.

According to a non-limited embodiment, the selected algorithm is chosen according to:

- data on the transmitter setup, and/or
- information on the propagation conditions of the optical signal.

Advantageously, the transmitter setup data comprises a modulation format of the optical signal, a pulse shape of the optical signal, and the symbol rate.

Algorithm performances depend on these parameters; therefore it is desirable to take them into account when selecting an algorithm. The information on the propagation conditions of the optical signal is either available through the control plane (in this embodiment, the receiver periodically gets the information from the control plane, for example), or estimated before or during the clock recovery step (in this embodiment, the receiver itself performs estimation of some types of impairments, like a signal to noise ratio, for example).

According to a non-limited embodiment, the method comprises the following step, between the sampling step and the recovering step: compensating the chromatic dispersion, at a clock rate equal to the sample per symbol rate.

The chromatic dispersion compensation unit is power demanding, therefore it is desirable to reduce its clock rate providing that is does not impact the recovery performance. With a reduced clock rate at all the receiver modules from the sampling unit to the CMA-based demultiplexing unit can lead to a potential power saving up to 55%.

According to a non-limited embodiment, step of calculating the performance estimate comprises the following sub-steps:

- Calculating a timing estimator for each digital complex polarization signal, according to the following formula:

$$\varepsilon z(n) = \sum_{k=1}^{NbSpectralLinePairs} W(k).f\left(Z_n(k).Z_n^{\,*}(k+P)\right)$$

where:

  • $\varepsilon z$ is the timing estimator for the digital complex polarization signal
  • n is a time index
  • Z is the Fourier transform of the digital complex polarization signal or of a pre-processed version of the digital complex polarization signal
  • $Z_n$ is the value of Z at time index n
  • NbSpectralLinePairs is the number of spectral line pairs distant of one symbol rate in signal Z

- P is a constant offset equal to the symbol rate between the spectral lines to be combined
- W is a weighting window
- *denotes the complex conjugate of a complex number
- f denotes either the imaginary part or the argument of a complex number

- Measuring the tone to noise ratio from the power spectral density of each timing estimator.

The timing estimator is calculated per window thanks to an overlap and save method, typically. The clock drift compensation process consists in analyzing the variation of the timing estimator as a function of n. A sinusoidal variation indicates that a drift exists and has to be compensated. A typical way to estimate the performance of the detection is to measure the tone to noise ratio TNR from the Power spectral density of the timing estimator. The emerging tone position in the spectral response tells about the spectral drift to compensate while its energy relatively to the rest of the spectral response informs about the likelihood (and about the detection noise level) of the estimated drift.

All timing algorithms mentioned in the introductory section as references (1) to (4) can be implemented thanks to the formula. In the Godard (1) and Gardner (2) algorithms, Z simply denotes the Fourier transform of a digital complex polarization signal, whereas in the Meng Yan (3) and Stojanovic (4) algorithms, Z denotes the Fourier transform of a pre-processed version of the digital complex polarization signal. For example, in the Meng Yan (3) algorithm, Z is the Fourier transform of the power of the digital complex polarization signal: $Fourier(Real(Zp^2)+Imag(Zp^2))$, where Zp stands for the digital complex polarization signal.

According to a non-limited embodiment, the performance estimate step comprises, before the sub-step of calculating timing estimators, a sub-step of pre-processing the digital complex polarization signals.

As explained previously, switching from one method to another can be conveniently achieved by activating or de-activating a pre-processing unit prior to the calculation of the timing estimator.

According to a second aspect, the invention relates to a coherent optical receiver of an optical Wavelength Division Multiplexed transmission system, comprising:

- A sampling unit configured to sample, at a sample per symbol rate, a pair of complex polarization signals of a Polarization Division Multiplexed optical signal received from a coherent optical transmitter at a symbol rate, so as to obtain a pair of digital complex polarization signals
- A clock recovery unit comprising:

  - A drift compensation unit configured to recover the receiver clock in the pair of digital complex polarization signals, using a clock recovery algorithm, said drift compensation unit working at a clock rate equal to the sample per symbol rate
  - A performance estimation unit configured to calculate a performance estimate of said recovery

- A clock recovery control unit configured to compare the performance estimate with a performance threshold, change the sample per symbol rate, and replace the clock recovery algorithm.

According to a non-limited embodiment, the coherent optical receiver comprises a chromatic dispersion compensation unit working at a clock rate equal to the sample per symbol rate.

According to a non-limited embodiment, the performance estimation unit comprises:

- a Fourier transform unit configured to calculate the Fourier transform of the digital complex polarization signals or of a pre-processed version of the digital complex polarization signals
- a timing estimation unit configured to calculate timing estimators for each Fourier transform
- a quality estimator unit configured to measure the tone to noise ratio of the power spectral density of each timing estimator.

According to a non-limited embodiment, the performance estimation unit comprises a pre-processing unit configured to pre-process the digital complex polarization signals before their passing through the Fourier transform unit.

According to a non-limited embodiment, the performance estimation unit comprises a switch for directing the digital complex polarization signals either to the Fourier transform unit, or to the pre-processing unit, said switch being controlled by the clock recovery control unit.

## DETAILED DESCRIPTION OF ILLUSTRATIVE EMBODIMENTS

Figure 2 illustrates a coherent optical WDM receiver Rx according to the invention, which receives an optical signal Sg from an optical transmitter at a symbol rate SB. As outlined in the introductory section, the receiver Rx typically comprises, among other units:

- a local oscillator OSC, also referred to as receiver clock
- a coherent detector DT configured to convert the received optical signal Sg into a pair of complex polarization signals Xp°, Yp°, each polarization signal Xp°, Yp° comprising an in-phase component Xp°i, Yp°i, and a quadrature-phase component Xp°q, Yp°q
- a sampling unit SPu comprising a bank of Analog-to-Digital Converters, configured to sample, at a samples per symbol rate, the pair of complex polarization signals Xp°, Yp°, so as to obtain a pair of digital complex polarization signals Xp, Yp
- a CD compensation unit CDu
- a clock recovery unit CRu
- a CMA-based polarization demultiplexing unit CMAu.

In addition, the receiver Rx comprises a clock recovery control unit CRCu. The clock recovery control unit CRCu receives from the transmitter, through a signaling or control channel in an example:

- data on the transmitter setup Dts, and
- information on the propagation conditions Ipc of the optical signal Sg.

Besides that, the clock recovery control unit CRCu receives from the clock recovery unit CRu a performance estimate Pst regarding the clock recovery process. A performance estimate is typically a TNR value normalized to spread between 0 (worst detection level) and 1 (best detection level, obtained in case of no impairment, i.e. in a back to back configuration with an infinite signal to noise ratio).

According to the received data Dt, information Ipc and performance estimate Pst, the clock recovery control unit CRCu sets and sends:

- a samples per symbol rate xSPS at which the sampling unit SPu must run, to the sampling unit SPu
- a clock rate at which the CD compensation unit CDu, the clock recovery unit CRu and the polarization demultiplexing unit CMAu must run, said clock rate being equal to the sample per symbol rate xSPS, to these units CDu, Cru, CMAu
- an algorithm setup Alg, to the clock recovery unit CRu. The clock recovery unit CRu is adapted to run an algorithm in accordance with the algorithm setup AlgSt. Said algorithm enables recovery, that is to say measurement and compensation, of the drift of the local oscillator OSC regarding a clock rate used at the transmitter side.

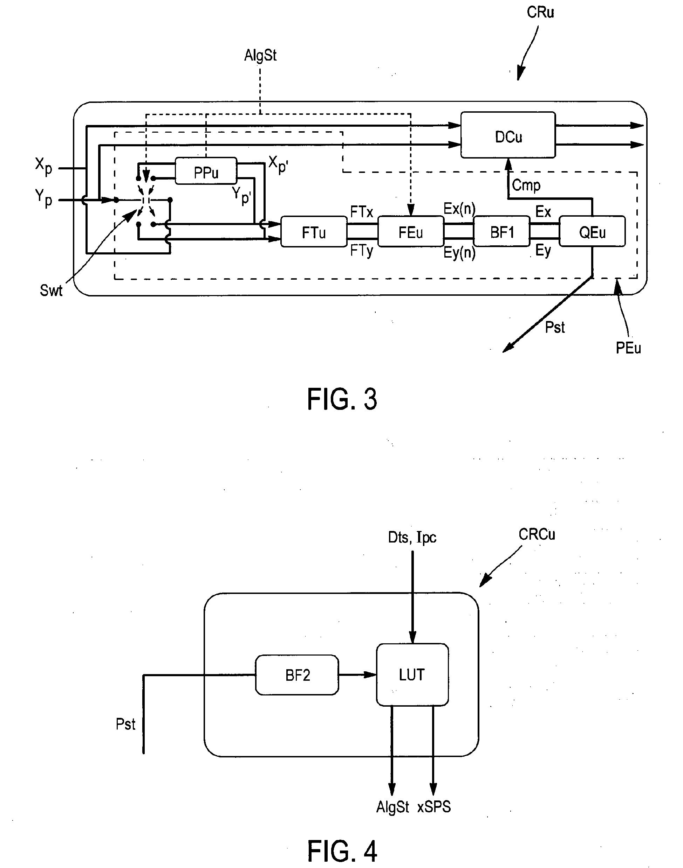

Figure 3 illustrates a non-limitative embodiment of the clock recovery unit CRu. The clock recovery unit CRu comprises:

- a drift compensation unit DCu configured to recover the drift of the local oscillator OSC on the pair of digital complex polarization signals Xp, Yp, according to a compensation value Cmp. The drift is typically compensated by means of a digital resampling of each digital complex polarization signals Xp, Yp.
- a performance estimation unit PEu configured to:

    o calculate a need for compensation, and accordingly send the compensation value Cmp to the drift compensation unit DCu
    o calculate a performance estimate Pst of the recovery.

The performance estimation unit PEu comprises:

- a pre-processing unit PPu configured to pre-process, according to the received algorithm setup AlgSt, the digital complex polarization signals Xp, Yp, so as to generate pre-processed version Xp', Yp'. The pre-processing unit PPu is associated with a specific clock recovery algorithm. It should be noted that for sake of simplicity, only one pre-processing unit PPu is presented. However any number of algorithms can be used for clock recovery by addition of other pre-processing units.
- a Fourier transform unit FTu configured to calculate the Fourier transforms FTx, FTy of the digital complex polarization signals Xp, Yp or of the pre-processed version Xp', Yp' of the digital complex polarization signals Xp, Yp
- a switch SWt for directing, according to the received algorithm setup AlgSt, the digital complex polarization signals Xp, Yp either to the Fourier transform unit FTu or to the pre-processing unit PPu
- a timing estimation unit TEu configured to calculate, according to the received algorithm setup AlgSt, a timing

estimator $\varepsilon x(n)$, $\varepsilon y(n)$ for each of said Fourier transforms FTx, FTy, where n is a time index
- a timing estimator buffer BF1 adapted to temporarily store the latest timing estimators $\varepsilon x(n)$, $\varepsilon y(n)$, $\varepsilon x(n-1)$, $\varepsilon y(n-1)$, $\varepsilon x(n-2)$, $\varepsilon y(n-2)$, etc, calculated by the timing estimation unit TEu
- a quality estimator unit QEu configured to measure the TNR of each timing estimator $\varepsilon x$, $\varepsilon y$. The need for compensation, by signal resampling technique for example, is directly deductible from the emerging tone location in the timing estimator spectral response.

The digital complex polarization signals Xp, Yp are processed independently in the performance estimation unit PEu, up to the quality estimator unit QEu typically, where the timing estimators $\varepsilon x$, $\varepsilon y$ are merged thanks to any desirable combination method.

Figure 4 illustrates a non-limitative embodiment of the clock recovery control unit CRCu. The clock recovery unit CRu comprises:

- a performance estimate buffer BF2 adapted to temporarily store the latest performance estimates Pst measured by the performance estimation unit PEu
- a look-up table LUT enabling selection of algorithm setups AlgSt and samples per symbol rates xSPS according to:

    o performance estimate Pst evolutions regarding a performance threshold. This threshold is typically a normalized TNR target value, for example 0.3, required to reach a given confidence level for the detection.
    o data on the transmitter setup Dts and information on the propagation conditions Ipc of the optical signal Sg.

In particular, the look-up table LUT stores a range of acceptable samples per symbol rates regarding each clock recovery algorithm.

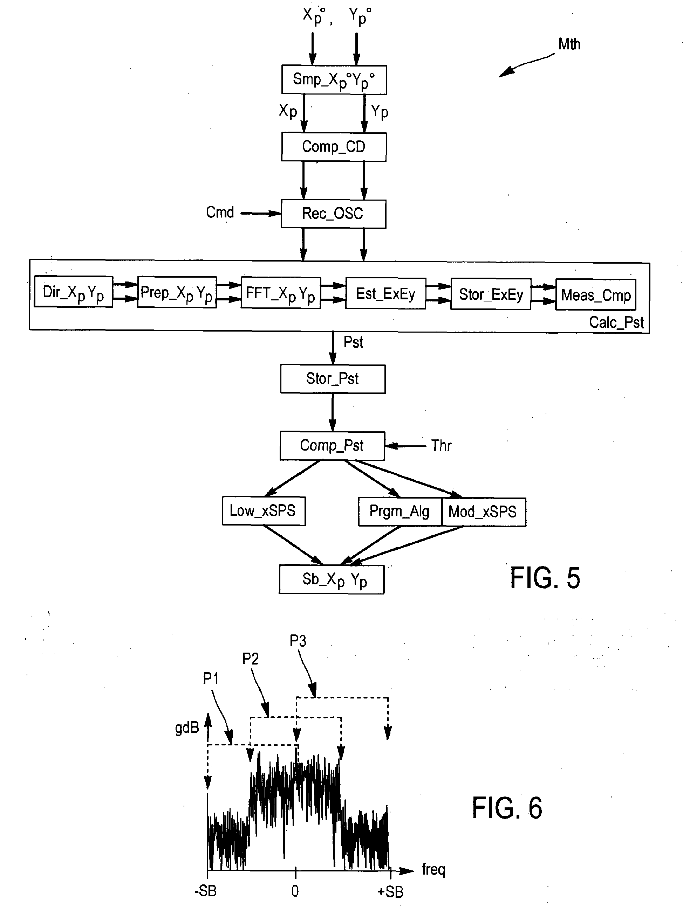

Figure 5 shows a block diagram of an example method Mth for optimizing clock recovery performances of the receiver Rx. The method Mth, performed by the receiver Rx, comprises the following steps:

- Sampling Smp_Xp°Yp°, at the samples per symbol rate xSPS, the pair of complex polarization signals Xp, Yp of the Polarization Division Multiplexed optical signal Sg, so as to obtain the pair of digital complex polarization signals Xp, Yp. The step of sampling Smp_Xp°Yp° is performed by the sampling unit SPu. Then, the pair of digital complex polarization signals Xp, Yp is sent from the sampling unit SPu to the drift compensation unit DCU and the performance unit PEu.

- Compensating Comp_CD the chromatic dispersion, at a clock rate equal to the sample per symbol rate xSPS. The step of compensating Comp_CD is performed by the CD compensation unit CDu.

- Recovering Rec_OSC the clock mismatches between the transmitter clock and the local oscillator OSC of the receiver Rx, from the pair of digital complex polarization signals Xp, Yp and the compensation value Cmd. The compensation value Cmd is a request for compensation calculated according to the recovery algorithm in accordance with the algorithm setup AlgSt, at a clock rate equal to the sample per symbol rate xSPS. The step of recovering Rec_OSC is performed by the drift compensation unit DCu. Then the pair of digital complex polarization signals whose drift was compensated is sent from the drift compensation unit DCu to the CMA-based polarization demultiplexing unit CMAu.

- Calculating Calc_Pst a performance estimate Pst of the recovery from the pair of digital complex polarization signals Xp, Yp and the algorithm setup AlgSt. The step of calculating Calc_Pst is performed by the performance estimation unit PEu. The step of calculating Calc_Pst comprises the sub-steps of :

    o Directing Dir_XpYp, according to the received algorithm setup AlgSt, the digital complex polarization signals Xp, Yp either to the Fourier transform unit FTu or to the pre-processing unit PPu. The sub-step of directing Dir_XpYp is performed by the switch SWt.

    o In the case where the digital complex polarization signals Xp, Yp were transferred to the pre-processing unit PPu, then pre-processing Prep_XpYp, according to the received algorithm setup AlgSt, the digital complex polarization signals Xp, Yp, so as to generate pre-processed versions Xp', Yp'. The sub-step of pre-processing Prep_XpYp is performed by the pre-processing unit PPu. Then the pre-processed versions Xp', Yp' are sent from the pre-processing unit PPu to the Fourier transform unit FTu.

o Performing a Fourier transform FFT_XpYp of:

- the digital complex polarization signals Xp, Yp, or
- the pre-processed version Xp', Yp' of the digital complex polarization signals Xp, Yp in the case where the sub-step of pre-processing Prep_XpYp was performed.

The sub-step of performing a Fourier transform FFT_XpYp is performed by the Fourier transform unit FTu. Then the Fourier transforms FTx, FTy are sent from the Fourier transform unit FTu to the timing estimation unit TEu.

○ Estimating Est_εxεy, according to the received algorithm setup AlgSt, a timing estimator εx(n), εy(n) for each of said Fourier transforms FTx, FTy, where n is a time index. The sub-step of estimating Est_εxεy is performed by the timing estimation unit TEu. Then, the timing estimators εx(n), εy(n) are sent from the timing estimation unit TEu to the timing estimators buffer BF1.

The timing estimator for a digital complex polarization signal Zp (Zp being Xp or Yp), is calculated according to the following formula:

$$\varepsilon z(n) = \sum_{k=1}^{NbSpectralLinePairs} W(k).imag\left(Z_n(k).Z_n{}^*(k+P)\right)$$

where:

- εz is the timing estimator for the digital complex polarization signal Zp, z being x or y depending to the considered digital polarization signal
- n is a time index
- Z is the Fourier transform of the digital complex polarization signal Zp, or of a pre-processed version Zp' of the digital complex polarization signal Zp
- $Z_n$ is the value of Z at time index n
- NbSpectralLinePairs is the number of spectral line pairs distant of one symbol rate SB in signal Z
- P is a constant offset equal to the symbol rate SB between the spectral lines to be combined
- W is a weighting window
- * denotes the complex conjugate of a complex number
- imag denotes the imaginary part of a complex number

It is to be noted that, in a non-limited embodiment, the weighting window W is a function whose value is 1. Thus, it can be said that the weighting window W is optional.

In the previous formula, the imaginary part may be replaced with the argument of the complex number.

Figure 6 depicts a graph showing a Fourier transform signal of a digital complex polarization signal with RRC pulse shaping close to Roll-Off Factor 0, at a samples per symbol rate of 2SPS. The x-axis measures frequency Freq; the y-axis measures gain gdb in decibel. It can be seen on this graph three spectral line pairs P1, P2, P3 distant of one symbol rate SB.

o Storing Stor_ εxεy the timing estimators εx(n), εy(n), in the timing estimators buffer BF1. Then, the timing estimators εx, εy are sent from the timing estimators buffer BF1 to the quality estimator unit QEu.

o Measuring Meas_Cmp the tone to noise ratio TNR from each timing estimator εx, εy, and deducing the need for compensation, that is to say the compensation value Cmp, and the performance estimate Pst. The sub-steps of measuring Meas_Cmp and calculating Calc_Pst are performed by the quality estimator unit QEu. Then, the compensation value Cmp is sent from the quality estimator unit QEu to the drift compensation unit DCu, while the performance estimate Pst is sent to the performance estimate buffer BF2.

- Storing Stor_Pst the performance estimate Pst in the performance estimate buffer BF2. Then, the performance estimators Pst over time are sent from the performance estimate buffer BF2 to the Look-Up Table LUT.

- Comparing Comp_Pst the performance estimate Pst with the performance threshold.

○ In the case where the performance estimate Pst is higher than the performance threshold, then selecting the samples per symbol rate xSPS in accordance with the range of acceptable samples per symbol rates for the algorithm, said range being stored in the Look-Up Table LUT. Then sending the selected samples per symbol rate xSPS to the sampling unit SPu, the CD compensation unit CDu, the clock recovery unit CRu and the polarization demultiplexing unit CMAu, so as to lower low_xSPS their clock rates.

∘ In the case where the performance estimate Pst is below the performance threshold, then selecting in the Look-Up Table an algorithm setup AlgSt and a samples per symbol rates xSPS in accordance with a range of acceptable samples per symbol rates for the selected algorithm, according to:

  ▪ the performance estimate Pst evolutions received from the performance estimate buffer BF2
  ▪ data on the transmitter setup Dts and information on the propagation conditions lpc of the optical signal Sg received from the transmitter.

Then, programming Prgm_Alg the switch SWt, the pre-processing unit PPu and the timing estimation unit TEu with the selected algorithm setup AlgSt, and modifying Mod_xSPS the sample per symbol rate xSPS.

- Sub-sampling Sb_XpYp the two sequences of symbols from the sample per symbol rate to 1 sample per symbol. The step of sub-sampling Sb_XpYp is performed by the polarization demultiplexing unit CMAu.

It should be noted that the description and drawings merely illustrate the principles of the proposed method and receiver. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the proposed method and receiver, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method (Mth) for optimizing clock recovery performances at a coherent optical receiver (Rx) of an optical Wavelength Division Multiplexed transmission system, said method (Mth) comprising the following steps:

  - Sampling (Smp_Xp°Yp°), at a samples per symbol rate (xSPS), a pair of complex polarization signals (Xp°, Yp°) of a Polarization Division Multiplexed optical signal (Sg) received from a coherent optical transmitter at a symbol rate (SB), so as to obtain a pair of digital complex polarization signals (Xp, Yp)
  - Recovering (Rec_OSC) a receiver clock in the pair of digital complex polarization signals (Xp, Yp), using a clock recovery algorithm, at a clock rate equal to the sample per symbol rate (xSPS)
  - Calculating (Calc_Pst) a performance estimate (Pst) of said clock receiver recovery
  - If said performance estimate (Pst) is below a performance threshold (Thr), then :

    • replacing (Prgm_Alg) the clock recovery algorithm with a selected clock recovery algorithm, and
    • modifying (Mod_xSPS) the sample per symbol rate (xSPS) in accordance with a range of acceptable samples per symbol rates for the selected clock recovery algorithm

  - Reiterating the previous steps until the performance estimate (Pst) reaches the performance threshold (Thr).

2. Method (Mth) according to claim 1, comprising the following step, after the step of calculating (Calc_Pst) a performance estimate: if the performance estimate (Pst) is higher than the performance threshold (Thr), then lowering (low_xSPS) the samples per symbol rate (xSPS) in accordance with a range of acceptable samples per symbol rates for the clock recovery algorithm.

3. Method (Mth) according to any of the previous claims, wherein the selected clock recovery algorithm is chosen according to :

  - data on the transmitter setup (Dts), and/or
  - information on the propagation conditions of the optical signal (Ipc).

4. Method (Mth) according to the previous claim, wherein the transmitter setup data (Dts) comprises a modulation format of the optical signal (Sg), a pulse shape of the optical signal (Sg), and the symbol rate (SR).

5. Method (Mth) according to any of the previous claims, comprising the following step, between the sampling step (Smp_Xp°Yp°) and the recovering step (Rec_OSC): compensating (Comp_CD) the chromatic dispersion, at a clock rate equal to the sample per symbol rate (xSPS).

6. Method (Mth) according to any of the previous claims, wherein the step of calculating (Calc_Pst) the performance estimate (Pst) comprises the following sub-steps:

- Calculating (Est_$\varepsilon x\varepsilon y$) a timing estimator ($\varepsilon x(n)$, $\varepsilon y(n)$) for each digital complex polarization signal (Xp, Yp), according to the following formula:

$$\varepsilon z(n) = \sum_{k=1}^{NbSpectralLinePairs} W(k).f(Z_n(k).Z_n^*(k+P))$$

where:

- $\varepsilon z$ is the timing estimator for the digital complex polarization signal
- n is a time index
- Z is the Fourier transform of the digital complex polarization signal or of a pre-processed version of the digital complex polarization signal
- $Z_n$ is the value of Z at time index n
- NbSpectralLinePairs is the number of spectral line pairs distant of one symbol rate (SR) in signal Z
- P is a constant offset equal to the symbol rate (SB) between the spectral lines to be combined
- W is a weighting window
- *denotes the complex conjugate of a complex number
- f denotes either the imaginary part or the argument of a complex number

- Measuring (Meas_Cmp) the tone to noise ratio (TNR) of the power spectral density of each timing estimator ($\varepsilon x(n)$, $\varepsilon y(n)$).

7. Method (Mth) according to any the previous claims, wherein the performance estimate step (Calc_Pst) comprises, before the sub-step of calculating timing estimators (Est_ $\varepsilon x\varepsilon y$), a sub-step of pre-processing (Prep_XpYp) the digital complex polarization signals (Xp, Yp).

8. Coherent optical receiver (Rx) of an optical Wavelength Division Multiplexed transmission system, comprising:

- A sampling unit (SPu) configured to sample, at a sample per symbol rate (xSPS), a pair of complex polarization signals (XP°, Yp°) of a Polarization Division Multiplexed optical signal (Sg) received from a coherent optical transmitter at a symbol rate (SB), so as to obtain a pair of digital complex polarization signals (Xp, Yp)

- A clock recovery unit (CRu) comprising:

• A drift compensation unit (DCu) configured to recover the receiver clock in the pair of digital complex polarization signals (Xp, Yp), using a clock recovery algorithm, said drift compensation unit (DCu) working at a clock rate equal to the sample per symbol rate (xSPS)
• A performance estimation unit (PEu) configured to calculate a performance estimate (Pst) of said clock receiver recovery

- A clock recovery control unit (CRCu) configured to compare the performance estimate (Pst) with a performance threshold, change the sample per symbol rate (xSPS), and replace the clock recovery algorithm.

9. Coherent optical receiver (Rx) according to claim 8, comprising a chromatic dispersion compensation unit (CRu) working at a clock rate equal to the sample per symbol rate (xSPS).

**10.** Coherent optical receiver (Rx) according to any of claims 8 or 9, wherein the performance estimation unit (PEu) comprises:

- a Fourier transform unit (FTu) configured to calculate the Fourier transform (FTx, FTy) of the digital complex polarization signals (Xp, Yp) or of a pre-processed version (Xp', Yp') of the digital complex polarization signals (Xp, Yp)
- a timing estimation unit (TEu) configured to calculate timing estimators ($\varepsilon x(n)$, $\varepsilon y(n)$) for each Fourier transform (FTx, FTy)
- a quality estimator unit (QEu) configured to measure the tone to noise ratio (TNR) of the power spectral density of each timing estimator ($\varepsilon x(n)$, $\varepsilon y(n)$).

**11.** Coherent optical receiver (Rx) according to the previous claim, wherein the performance estimation unit (PEu) comprises a pre-processing unit (PPu) configured to pre-process the digital complex polarization signals (Xp, Yp) before their passing through the Fourier transform unit (FTu).

**12.** Coherent optical receiver (Rx) according to the previous claim, wherein the performance estimation unit (PEu) comprises a switch (SWt) for directing the digital complex polarization signals (Xp, Yp) either to the Fourier transform unit (FTu), or to the pre-processing unit (PPu), said switch (SWt) being controlled by the clock recovery control unit (CRCu).

FIG. 1

FIG. 2

EP 3 086 502 A1

FIG. 3

FIG. 4

FIG. 5

FIG. 6

Europäisches
Patentamt

European
Patent Office

Office européen
des brevets

# EUROPEAN SEARCH REPORT

Application Number

EP 15 16 4397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 8 526 823 B2 (SWANSON ERIC [US] ET AL) 3 September 2013 (2013-09-03) | 1-5,7-9 | INV. H04L7/00 |
| A | * figures 2-4 * <br> * column 7, line 24 - line 43 * <br> * column 7, line 64 - column 8, line 21 * <br> * column 11, line 34 - line 19 * <br> * column 12, line 15 - line 22 * <br> * column 12, line 36 - line 49 * | 6,10-12 | H04L7/027 <br> H04B10/61 <br> ADD. <br> H04J14/02 <br> H04J14/06 <br> H04B10/077 |
| Y | HAN SUN ET AL: "Clock recovery and jitter sources in coherent transmission systems", OPTICAL FIBER COMMUNICATION CONFERENCE AND EXPOSITION (OFC/NFOEC), 2012 AND THE NATIONAL FIBER OPTIC ENGINEERS CONFERENCE, IEEE, 4 March 2012 (2012-03-04), pages 1-3, XP032339873, ISBN: 978-1-4673-0262-3 * the whole document * | 1-5,7-9 | |
| A | STOJANOVIC NEBOJSA ET AL: "Clock recovery in coherent optical receivers", 2015 OPTICAL FIBER COMMUNICATIONS CONFERENCE AND EXHIBITION (OFC), OSA, 22 March 2015 (2015-03-22), pages 1-3, XP032784423, [retrieved on 2015-06-10] * the whole document * | 1,8 | TECHNICAL FIELDS SEARCHED (IPC) <br><br> H04L <br> H04B <br> H04J |
| A | US 7 627 252 B2 (SUN HAN [CA] ET AL) 1 December 2009 (2009-12-01) * column 5, line 19 - line 55 * * column 13, line 3 - line 22 * * column 13, line 36 - column 14, line 7 * * figures 5A, 8 * | 1-12 | |

-/--

The present search report has been drawn up for all claims

| Place of search | Date of completion of the search | Examiner |
|---|---|---|
| The Hague | 30 October 2015 | Pieper, Thomas |

EPO FORM 1503 03.82 (P04C01)

Europäisches
Patentamt

European
Patent Office

Office européen
des brevets

# EUROPEAN SEARCH REPORT

Application Number

EP 15 16 4397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STOJANOVIC NEBOJSA ET AL: "Feed-forward and feedback timing recovery for Nyquist and faster than Nyquist systems", OFC 2014, OSA, 9 March 2014 (2014-03-09), pages 1-3, XP032633069, DOI: 10.1109/OFC.2014.6886780 [retrieved on 2014-08-27] * the whole document * | 1,8 | |
| A | MUELLER K H ET AL: "TIMING RECOVERY IN DIGITAL SYNCHRONOUS DATA RECEIVERS", IEEE TRANSACTIONS ON COMMUNICATIONS, IEEE SERVICE CENTER, PISCATAWAY, NJ. USA, vol. 24, no. 5, 1 May 1976 (1976-05-01), pages 516-531, XP000573328, ISSN: 0090-6778, DOI: 10.1109/TCOM.1976.1093326 * abstract; figure 1 * * page 517, right-hand column, paragraph 3 * | 1,8 | |
| A | FRANKS L E: "CARRIER AND BIT SYNCHRONIZATION IN DATA COMMUNICATION - A TUTORIAL REVIEW", IEEE TRANSACTIONS ON COMMUNICATIONS, IEEE SERVICE CENTER, PISCATAWAY, NJ. USA, vol. COM-28, no. 8, 1 August 1980 (1980-08-01), pages 1107-1121, XP000758585, ISSN: 0090-6778, DOI: 10.1109/TCOM.1980.1094775 * figures 3-5 * | 1,8 | |

**TECHNICAL FIELDS SEARCHED (IPC)**

-/--

The present search report has been drawn up for all claims

| Place of search | Date of completion of the search | Examiner |
|---|---|---|
| The Hague | 30 October 2015 | Pieper, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 15 16 4397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | GARDNER F M: "A BPSK/QPSK TIMING-ERROR DETECTOR FOR SAMPLED RECEIVERS", IEEE TRANSACTIONS ON COMMUNICATIONS, IEEE SERVICE CENTER, PISCATAWAY, NJ. USA, vol. 34, no. 5, 1 May 1986 (1986-05-01), pages 423-429, XP000608506, ISSN: 0090-6778, DOI: 10.1109/TCOM.1986.1096561 * page 426, right-hand column; figure 2 * | 1,8 | |
| A,D | GODARD D N: "PASSBAND TIMING RECOVERY IN AN ALL-DIGITAL MODEM RECEIVER", IEEE TRANSACTIONS ON COMMUNICATIONS, IEEE SERVICE CENTER, PISCATAWAY, NJ. USA, vol. 26, no. 5, 1 May 1978 (1978-05-01), pages 517-523, XP000942625, ISSN: 0090-6778, DOI: 10.1109/TCOM.1978.1094107 * figure 3 * | 1,8 | |

**TECHNICAL FIELDS SEARCHED (IPC)**

The present search report has been drawn up for all claims

| Place of search | Date of completion of the search | Examiner |
|---|---|---|
| The Hague | 30 October 2015 | Pieper, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................................
& : member of the same patent family, corresponding
document

EPO FORM 1503 03.82 (P04C01)

**EP 3 086 502 A1**

## ANNEX TO THE EUROPEAN SEARCH REPORT
## ON EUROPEAN PATENT APPLICATION NO.

EP 15 16 4397

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2015

| Patent document cited in search report | | Publication date | Patent family member(s) | | Publication date |
|---|---|---|---|---|---|
| US 8526823 | B2 | 03-09-2013 | NONE | | |
| US 7627252 | B2 | 01-12-2009 | US | 2006285854 A1 | 21-12-2006 |
| | | | US | 2006285855 A1 | 21-12-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. GODARD.** Passband timing recovery in all digital modem receiver. *IEEE Trans. On Communication,* 1978
- **F. GARDNER.** A BPSK/QPSK timing-error detector for sampled signals. *IEEE Trans. On Communications,* 1986

- **MENG YAN.** Digital clock recovery algorithm for Nyquist signal. *OFC proceedings,* 2013
- **N. STOJANOVIC.** Digital phase detector for Nyquist and Faster than Nyquist systems. *IEEE Com Letters,* 2014